(19) Europäisches Patentamt
European Patent Office
Office européen des brevets

(11) EP 2 412 946 B1

(12) FASCICULE DE BREVET EUROPEEN

(45) Date de publication et mention de la délivrance du brevet:
**19.08.2015 Bulletin 2015/34**

(51) Int Cl.:
***F01N 3/20*** *(2006.01)* ***F01N 9/00*** *(2006.01)*

(21) Numéro de dépôt: **10007831.0**

(22) Date de dépôt: **28.07.2010**

# (54) Procédé destiné à réduire la quantité de NOx dans les gaz d'échappement d'un véhicule à moteur

Verfahren zur Reduzierung der Menge an Stickoxiden (NOx) in Abgasen von Kraftfahrzeugen

Method intended for reducing the amount of NOx in the exhaust fumes of a motor vehicle

(84) Etats contractants désignés:
**AL AT BE BG CH CY CZ DE DK EE ES FI FR GB GR HR HU IE IS IT LI LT LU LV MC MK MT NL NO PL PT RO SE SI SK SM TR**

(43) Date de publication de la demande:
**01.02.2012 Bulletin 2012/05**

(73) Titulaire: **Aaqius & Aaqius S.A.**
**1207 Genève (CH)**

(72) Inventeur: **Audouin, Arnaud**
**75018 Paris (FR)**

(74) Mandataire: **Regimbeau**
**20, rue de Chazelles**
**75847 Paris Cedex 17 (FR)**

(56) Documents cités:
**EP-A1- 1 977 817**
**EP-A1- 2 181 963**
**WO-A2-2006/012903**
**DE-A1-102006 061 370**

EP 2 412 946 B1

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

## Description

L'invention proposée concerne l'industrie automobile et porte plus particulièrement sur un procédé de pilotage d'un système destiné à réduire la quantité de NOx dans les gaz d'échappement d'un véhicule moteur.

Les émissions de polluants liées au transport sont depuis près de trente ans un moteur de progrès de premier plan de l'industrie. La sévérisation progressive des limites en émission pour les quatre polluants réglementés (CO, HC, NOx, particules) a permis d'améliorer significativement la qualité de l'air notamment dans les grandes agglomérations.

L'utilisation toujours croissante de l'automobile nécessite de poursuivre les efforts pour réduire encore davantage ces émissions de polluants. Ainsi, la réduction des oxydes d'azote (NOx) reste une problématique complexe dans le contexte de la sévérisation des seuils émission Européen attendu en 2015 pour l'entrée en vigueur de la norme €6. Disposer de technologies de dépollution à forte efficacité dans toutes les conditions de roulage reste un enjeu majeur pour l'industrie du transport.

Dans un deuxième temps, la consommation de carburant, en lien direct avec les émissions de CO2, est devenue une préoccupation majeure. Ainsi, une réglementation sera mise en place au niveau Européen à partir de 2012 sur les émissions de CO2 des véhicules particuliers. Il est d'ores et déjà acquis que cette limite sera régulièrement abaissée au cours des décennies à venir. La réduction de CO2 s'est donc imposée à l'évidence pour toute l'industrie des transports.

Cette double problématique réduction de la pollution locale (NOx) et réduction de la consommation carburant (CO2) est particulièrement difficile pour le moteur Diesel dont la combustion en mélange pauvre s'accompagne d'émission NOx difficile à traiter.

Il existe déjà des dispositifs permettant la réduction de la quantité de NOx au moyen d'un catalyseur SCR (*Selective Catalytic Reduction*) par de l'ammoniac stocké dans un matériau de stockage du type sels chlorures d'alcalino-terreux. L'injection d'ammoniac dans les gaz d'échappements est pilotée grâce à un dispositif de réchauffage permettant de chauffer le matériau de stockage afin de permettre la réaction réversible d'absorption/désorption de l'ammoniac puisque cette réaction est directement liée à la température au sein du matériau de stockage.

Le document WO2006/012903 A2 divulgue un tel dispositif de stockage d'ammoniac.

Le but de la présente invention est de proposer un procédé pour limiter la consommation d'énergie dudit dispositif de réchauffage tout en assurant une pression suffisamment élevée au sein du matériau de stockage pour permettre un débit d'injection suffisant et compatible avec les émissions de NOx. Conformément à l'invention, ce but est atteint grâce à un procédé de pilotage d'un système destiné à réduire la quantité de NOx dans les gaz d'échappement d'un véhicule à moteur. Le système comporte, à bord d'un véhicule à moteur: une enceinte de stockage au sein de sel de type chlorure de métaux alcalino-terreux, l'enceinte de stockage contenant un agent dépolluant; un dispositif de chauffage agencé pour piloter en température l'enceinte de stockage; et un module d'alimentation agencé pour injecter l'agent dépolluant dans les gaz d'échappement. Le module d'alimentation comporte un dispositif de mesure de la pression ou de la température à l'intérieur de l'enceinte de stockage ainsi qu'un dispositif de dosage de l'agent dépolluant. Le procédé selon l'invention comprend les étapes suivantes:

a). calculer, au cours du fonctionnement du véhicule à moteur et pour une période de roulage prédéterminée, une pression ou une température de consigne dans l'enceinte de stockage (8) selon un ou plusieurs paramètres du véhicule à moteur qui est/sont fonction du type de roulage dudit véhicule pendant cette période;

b). comparer la pression ou la température de consigne à la pression ou à la température mesurée par le dispositif de mesure de pression (6a) ou de température au cours du fonctionnement du véhicule à moteur après ladite période de roulage; et

c). chauffer l'enceinte de stockage (8) si la pression ou la température à l'intérieur de celle-ci est inférieure à la pression ou à la température de consigne.

Afin de déterminer la pression ou la température de consigne dans l'enceinte de stockage pendant la période de roulage prédéterminée, l'étape a) comporte, de préférence, les opérations suivantes:

d). définir un critère de roulage du véhicule en fonction des différents paramètres du véhicule à moteur pendant une première période (T1) de fonctionnement dudit véhicule significativement plus courte que ladite période de roulage prédéterminée;

e). déterminer la moyenne du critère de roulage durant la première période (T1) de fonctionnement du véhicule à moteur;

f). comparer cette moyenne du critère de roulage à différents seuils afin de déterminer un type de roulage présent du véhicule à moteur durant la première période (T1) parmi plusieurs types de roulage;

g). attribuer une pression ou une température de consigne en fonction du type de roulage présent et/ou d'une tendance représentative des conditions de roulage passées, ladite tendance des conditions de roulage passées étant déterminée par une opération supplémentaire qui consiste à déterminer le temps passé par le véhicule à moteur sur chaque type de roulage durant une seconde période (T2) de fonctionnement du véhicule à moteur correspondant à ladite période de roulage prédéterminée.

Selon une forme d'exécution préférentielle de l'invention, la moyenne du critère de roulage durant la première période (T1) de fonctionnement du véhicule à moteur est comparée à au moins trois et de préférence cinq seuils différents afin de pouvoir déterminer respectivement au moins trois et de préférence cinq types de roulage. Par ailleurs, selon cette forme d'exécution préférentielle, trois tendances de roulage sont déterminés pour la seconde période (T2) de fonctionnement du véhicule à moteur correspondant respectivement à une conduite en ville, sur route et sur autoroute. Optionnellement, une tendance dite mixte peut être ajoutée lorsqu'aucun type de roulage ne prédomine durant cette seconde période (T2). Enfin, le système est adapté pour que la pression de consigne puisse varier, de préférence, entre 1 et 15 bar afin de faire varier le débit d'ammoniac dans une plage allant de 0.5 mg/s à 50 mg/s.

Les caractéristiques de l'invention apparaîtront plus clairement à la lecture de la description de cette forme d'exécution préférentielle, donnée uniquement à titre d'exemple, nullement limitative en se référant aux figures schématiques, dans lesquelles:

- la Figure 1 illustre l'architecture structurelle d'un système de stockage et d'alimentation en ammoniac,
- la Figure 2 illustre l'architecture fonctionnelle du système de stockage et d'alimentation en ammoniac,
- La Figure 3 représente les courbes d'équilibre d'absorption/désorption de l'ammoniac dans trois sels de type chlorure de métaux alcalino-terreux
- la Figure 4 illustre une cartographie pour la commande du dispositif de dosage pour une pression système variable,
- la Figure 5 illustre le principe de calcul du critère de roulage,
- la Figure 6 illustre le principe de calcul du critère tendance de roulage,
- la Figure 7 illustre une cartographie de la consigne de pression selon le type et la tendance représentative de roulage.

Selon cette forme d'exécution préférentielle de l'invention, le procédé de pilotage est adapté à un dispositif de réduction catalytique sélective des $NO_x$ (SCR) émis par les gaz d'échappement d'un moteur thermique d'un véhicule.

Selon la Figure 2, le système comporte une enceinte de stockage 8 contenant un agent dépolluant et agencée pour être pilotée en température par un dispositif de chauffage 9. Le système comporte en outre un module d'alimentation 6 agencé pour injecter l'agent dépolluant dans les gaz d'échappement, le module d'alimentation 6 comportant un dispositif de mesure de la pression 6a ou de la température à l'intérieur de l'enceinte de stockage 8 ainsi qu'un dispositif de dosage 6b de l'agent dépolluant. Le procédé de pilotage selon l'invention consiste par exemple à: définir un critère de roulage déterminé en fonction notamment du couple moteur pendant une première période; filtrer le critère de roulage avec une période de filtrage T1 correspondant à la première période (Figure 5); comparer le critère de roulage filtré à différents seuils afin de déterminer un type de roulage; déterminer le temps passé sur chaque type de roulage durant une seconde période T2 afin d'associer une tendance représentative des conditions de roulage au cours de cette seconde période (Figure 6); calculer une pression ou une température de consigne en fonction du type et de la tendance représentative des conditions de roulage passées; comparer la pression ou la température de consigne et la pression ou la température mesurée par le dispositif de mesure de pression 6a ou de température; chauffer l'enceinte de stockage 8 si la pression ou la température à l'intérieur de celle-ci est inférieure à la pression ou à la température de consigne.

Plus particulièrement, selon la Figure 1, le moteur 1 est piloté par un calculateur électronique 11. A la sortie du moteur, les gaz d'échappement 12 sont dirigés vers un premier élément de dépollution 2, qui peut être constitué d'un catalyseur d'oxydation ou d'un catalyseur trois voies et éventuellement d'un filtre à particules.

L'ammoniac 16 est injecté au moyen d'un module d'injection 3 à l'échappement en aval du premier élément de dépollution 2 et est mélangé aux gaz d'échappement. Le mélange ammoniac/gaz d'échappement 13 traverse ensuite un catalyseur-SCR 4 qui permet la réduction des NOx par l'ammoniac. Divers éléments complémentaires de post-traitement 5 peuvent être positionnés après le catalyseur-SCR tel qu'un filtre à particules ou un catalyseur d'oxydation. Les gaz d'échappement dépollués 14 sont ensuite dirigés vers la sortie d'échappement.

***Stockage d'ammoniac dans les sels chlorures d'alcalino-terreux***

Pour assurer l'alimentation et le dosage de l'ammoniac 16, l'enceinte de stockage d'ammoniac 8 contient un matériau de stockage 7 et est agencée pour être pilotée en température par le dispositif de réchauffage 9 qui peut être sous forme d'une résistance électrique ou d'un échangeur de chaleur alimenté par un fluide caloporteur tel que le liquide de refroidissement du moteur. Selon la présente invention, le stockage de l'ammoniac se fait, de préférence, au sein de sel de type chlorure de métaux alcalino-terreux (MgCl2, SrCl2, CaCl2, BaCl2, etc...).

Dans le système proposé, le stockage d'ammoniac repose sur une réaction réversible solide - gaz du type :

$$<\text{Solide A}> \; + \; (\text{Gaz}) \; \underset{(2)}{\overset{(1)}{\rightleftarrows}} \; <\text{Solide B}>$$

L'ammoniac forme avec les chlorures d'alcalino-terreux des complexes de coordination aussi appelé ammoniacates. Ce phénomène est connu et décrit abondamment dans la littérature.

Par exemple, les réactions de l'ammoniac avec le chlorure de strontium sont :

$$SrCl_2 + NH_3\,(g) \rightleftarrows Sr\,(NH_3)Cl_2$$

$$Sr\,(NH_3)\,Cl_2 + 7\,NH_3 \rightleftarrows Sr\,(NH_3)_8\,Cl_2\,(s)$$

et pour l'ammoniac avec le chlorure de Barium, une seule réaction :

$$BaCl_2 + 8\,NH_3\,(g) \rightleftarrows Ba\,(NH_3)_8\,Cl_2\,(s)$$

L'absorption chimique du ligand ammoniac par l'absorbant $SrCl_2$ et $BaCl_2$ entraîne, entre le solide et le gaz, un transfert d'électrons qui se traduit par des liaisons chimiques entre $NH_3$ et la couche externe des atomes de $SrCl_2$ et $BaCl_2$. La pénétration du gaz dans la structure du solide se faisant dans la totalité de sa masse par un processus de diffusion. Cette réaction est parfaitement réversible, l'absorption étant exothermique et la désorption endothermique.

Au cours de cette réaction, la fixation du gaz par le solide s'accompagne d'une augmentation de volume, l'octoammoniacate occupant alors un volume très supérieur au volume du sel pur (jusqu'à un rapport de 4 à 5 fois). L'augmentation de volume du sel est due non seulement à la dilatation de son réseau cristallin mais aussi à son fractionnement laissant ainsi de l'espace libre entre les microcristaux de $Sr(NH_3)_8Cl_2$ et $Ba(NH_3)_8Cl_2$.

La plupart des sels désorbe l'ammoniac par palier, en fonction de leurs sites de coordination. Dans le cas du chlorure de Strontium, sept molécules d'ammoniac sont désorbées dans un premier temps, une dernière molécule d'ammoniac dans un deuxième temps. La courbe d'équilibre d'absorption/désorption d'ammoniac des sels est définie en fonction de la température et la pression par la relation de Clausius-Clapeyron.

$$\ln P_{NH3} = \frac{-\Delta Hr}{RT} + \frac{\Delta Sr}{R}$$

où $\Delta Hr$ représente l'enthalpie et $\Delta Sr$ l'entropie de formation du complexe ammoniac/sel pour la stoechiométrie considérée.

Le tableau ci-dessous présente les valeurs d'enthalpie et entropie de formation issues de la littérature scientifique pour les sels $MgCl_2$, $SrCl_2$ et $BaCl_2$.

| **Sel** | **Equilibre** | **Enthalpie** (J/mol) | **Entropie**(J/mol.K) |
|---|---|---|---|
| NH3 | (L/G) | 23 336 | 193 |
| $MgCl_2$ | (6/2) | 55 660 | 231 |
| | (2/1) | 74 911 | 230 |
| | (1/0) | 87 048 | 231 |

(suite)

| Sel | Equilibre | **Enthalpie** (J/mol) | **Entropie**(J/mol.K) |
|---|---|---|---|
| $SrCl_2$ | (8/1) | 41 431 | 229 |
| | (1/0) | 48 123 | 230 |
| $BaCl_2$ | (8/0) | 37 665 | 227 |

Les courbes d'équilibre d'absorption/désorption d'ammoniac dans ces trois sels sont représentées à la Figure 3. Ces phénomènes d'absorption et désorption sont entièrement réversibles. Il est alors possible de stocker l'ammoniac dans les sels pour l'application SCR. L'ammoniac est injecté dans l'échappement pour la dépollution après désorption des sels, cette désorption étant pilotée en contrôlant température et/ou pression au sein de l'enceinte de stockage 8.

Selon la Figure 2, cette enceinte de stockage 8 est reliée au dispositif d'alimentation et de dosage 6. Ce dispositif 6 peut être piloté par un contrôleur électronique 10 relié au calculateur électronique du moteur 11. Dans une autre configuration, le module d'alimentation et de dosage 6 peut être directement piloté par le calculateur moteur 11 selon le principe de l'invention.

D'après la figure 2, l'enceinte de stockage en ammoniac 8 comporte une interface 8a qui permet d'assurer une connexion sécurisée entre l'enceinte de stockage 8 et le module d'alimentation 6. Celui-ci est composé d'un capteur de pression 6a et d'un dispositif de dosage de l'ammoniac 6b.

Selon l'invention, le dispositif de dosage de l'ammoniac 6b est piloté en fonction d'un certain nombre de paramètre moteurs et véhicule issus du calculateur moteur 11 qui sont utilisés en combinaison avec l'information pour permettre un pilotage optimisé du dispositif de réchauffage 9.

***Dispositif de dosage adapté à une pression dynamique***

On appellera pression système la pression qui règne en fonctionnement au sein du système de stockage et d'alimentation, incluant l'enceinte de stockage 8, l'interface de connexion, 8a, le capteur de pression 6a et le dispositif de dosage en ammoniac 6a. Cette pression système est directement reliée à la température au sein de l'enceinte de stockage 8 par la relation la relation de Clausius-Clapeyron telle que définie ci-dessus.

La pression du système en fonctionnement peut varier en fonction de la température extérieure et/ou du réchauffage appliqué à l'enceinte de stockage dans une plage de pression comprise entre 1 et 15bar.

***Calcul d'une consigne de pression dynamique***

Pour limiter la consommation d'énergie du dispositif de réchauffage, on cherche au maximum à limiter la pression système. D'un autre côté, la pression système doit être suffisamment élevée pour permettre un débit d'injection suffisant et compatible des émissions de NOx du moteur thermique.

Dans la présente invention, la consigne de pression est déterminée de façon dynamique en fonction d'une analyse d'un certain nombre de paramètres moteur et véhicule, comme par exemple la concentration de NOx émis à chaque instant (grandeur pouvant être mesurée et/ou modélisée), la température du lubrifiant moteur, la température du liquide de refroidissement moteur, la vitesse du véhicule, le régime moteur, la charge moteur ou une combinaison de ces paramètres.

Dans la suite est décrit un mode de réalisation privilégié pour cette analyse des conditions de roulage présentes (critère type de roulage) et passées (critère tendance de roulage) qui permet un découpage précis des différentes phases de vie d'un véhicule et offre une grande liberté sur la définition de la consigne de pression.

***Calcul du critère type de roulage***

Dans un premier temps, un critère de roulage est défini par la relation :

$$\textit{Critère de roulage} = \textit{vitesse véhicule} \times (1 + K \times CMI)$$

où *CMI* est le couple moteur indiqué et *K* le coefficient de correction du couple moteur permettant d'intégrer le rapport poids/puissance, de prendre en compte les différences entre les véhicules dotés d'une boîte de vitesse manuelle ou d'une boîte de vitesse automatique, pour ainsi caractériser au maximum chaque type de roulage (paramètre calibrable

pour chaque application).

Comme illustré à la Figure 5, le critère de roulage brut est ensuite filtré avec une première période T1 calibrable afin d'obtenir une moyenne du critère de roulage pour la période T1. On récupère donc toutes les T1 secondes une nouvelle valeur relative au critère de roulage qui restera valable pendant T1 secondes.

Le type de roulage est alors défini en comparant le critère de roulage filtré à des seuils calibrables de la manière suivante:

*Si critère de roulage filtré (t) < Seuil critère 1*
  *Type roulage = 1 (ville sévère)*
*Si Seuil critère 1 ≤ critère de roulage filtré (t) < Seuil critère 2*
  *Type roulage = 2 (ville moyenne)*
*Si Seuil critère 2 ≤ critère de roulage filtré (t) < Seuil critère 3*
  *Type roulage = 3 (route)*
*Si Seuil critère 3 ≤ critère de roulage filtré (t) < Seuil critère 4*
  *Type roulage = 4 (montagne)*
*Si Seuil critère 4 ≤ critère de roulage filtré (t)*
  *Type roulage = 5 (autoroute)*

***Calcul du critère tendance de roulage***

Le temps passé sur chaque type de roulage durant une seconde période T2 cinq fois plus longue que la période T1 est ensuite calculé. On obtient donc un vecteur de cinq valeurs X1 à X5 dont la somme vaut 100 (Figure 6).

A partir de la répartition des types de roulage à l'instant t on associe une tendance représentative des conditions de roulage passées. Le nombre de tendances est limité à 3 (ville, route et autoroute) auxquelles on ajoute une tendance « mixte » lorsqu'aucun type de roulage ne prédomine. Les règles de détermination des tendances sont les suivantes:

*Si X1 + X2 > Seuil Tendance Ville*
  *Tendance Roulage = 1 (ville)*
*Si X3 + X4 + X5 > Seuil Tendance Rapide*
*Si X3 + X4 > Seuil Tendance Route*
    *Tendance Roulage = 2 (route)*
  *Sinon*
    *Tendance Roulage = 3 (autoroute)*
*Sinon*
  *Tendance Roulage = 0 (mixte)*

Pour des raisons de cohérence on impose les règles suivantes :

- *Seuil Tendance Ville > 50%*
- *Seuil Tendance Rapide > 50%*
- *Seuil Tendance Route < Seuil Tendance Rapide*

La tendance de roulage est réinitialisée dès que le moteur est coupé. Ne disposant pas de répartition des types de roulage durant les T2 premières secondes, la tendance de roulage est systématiquement initialisée à 2 (route).

***Calcul de la consigne de pression dynamique***

Dans la présente invention il est proposé de déterminer la consigne de pression en fonction de cette analyse des conditions de roulage présentes et passées. Ainsi, la consigne de pression est calculée par une cartographie telle que représentée à la Figure 7 en fonction des critères type de roulage et tendance de roulage. Ainsi, la demande de débit en ammoniac à une pression système donnée, mesurée par le dispositif 6a, est converti en rapport cyclique d'ouverture du dispositif de dosage en fonction de cette cartographie.

L'analyse des conditions de roulage présentes et passées permet un découpage précis des différentes phases de vie d'un véhicule et est bien adaptée au calcul de la pression en ammoniac. Par exemple, pour un véhicule dont le passé et le présent est *ville sévère,* il y a peu d'intérêt à assurer une pression système élevée, les débits de NH3 nécessaires au traitement des NOx émis dans ces conditions de roulage étant relativement faibles. En revanche, pour un véhicule dont le passé est *ville* et le présent est *route,* il parait intéressant d'augmenter la pression système en prévision des débits de NH3 élevés nécessaires dans ces conditions de roulage.

A noter que c'est la calibration du calcul des critères type de roulage et tendance de roulage (T1, T2, X1, X2...) qui permet un pilotage optimisée de la consigne de pression au cours du temps, c'est-à-dire dimensionnant au plus juste la consommation d'énergie lié au réchauffage du système. A noter que cette calibration doit aussi prendre en compte le temps de réponse du système, i.e. temps de réponse entre une augmentation de la consigne de pression système et l'atteinte de cette pression système.

***Pilotage du dispositif de réchauffage par la consigne de pression dynamique***

Dans la présente invention, on défini par $\Delta P_{éq}$ l'écart de pression entre $P_{consigne}$ la pression de consigne déterminée par les stratégies ci-dessus et $P_{système}$ la pression mesurée au moyen du capteur de pression 6a :

$$\Delta P_{éq} = P_{consigne} - P_{système}$$

$$\begin{cases} \text{- Lorsque } \Delta P_{éq} < 0 \text{ : pas de réchauffage nécessaire} \\ \text{- Lorsque } \Delta P_{éq} > 0 \text{ : mise en action du système de réchauffage nécessaire} \end{cases}$$

Dans la présente invention, le dispositif de réchauffage est piloté en puissance par l'intermédiaire d'une cartographie dépendant de la pression système $P_{système}$ et l'écart de pression $AP_{éq}$. Cette cartographie est à calibrer pour le système mis en oeuvre et pour le temps de réponse souhaité. On établit alors une cartographie de « montée en température du système de stockage et d'alimentation en ammoniac ».

A noter qu'il est aussi possible de piloter le dispositif en puissance au moyen d'une cartographie $T_{système}$ et $\Delta T_{éq}$, ces 2 grandeurs pouvant être calculé directement à partir des valeurs de pression système ($P_{système}$) et écart de pression ($\Delta P_{éq}$) au moyen de la relation de Clausius-Clapeyron.

A noter aussi que cette cartographie en pression (ou en température) peut être déterminée de façon expérimentale sur le système mis en oeuvre car elle dépend d'un grand nombre de paramètres : perte thermique dans le système (intérêt de l'isolation de l'enceinte de stockage), dispositif de réchauffage (électrique, fluide caloporteur), matrice composite graphite/sel (type de sel, densité de liant, conductivité et perméabilité, etc...)

## Revendications

**1.** Procédé de pilotage d'un système destiné à réduire la quantité de NOx dans les gaz d'échappement d'un véhicule à moteur, le système comportant, à bord d'un véhicule à moteur:

- une enceinte de stockage (8) au sein de sel de type chlorure de métaux alcalino-terreux, l'enceinte de stockage (8) contenant un agent dépolluant;
- un dispositif de chauffage (9) agencé pour piloter en température l'enceinte de stockage (8);
- un module d'alimentation (6) agencé pour injecter l'agent dépolluant dans les gaz d'échappement, et comportant:
  - un dispositif de mesure de la pression (6a) ou de la température à l'intérieur de l'enceinte de stockage (8) et;
  - un dispositif de dosage (6b) de l'agent dépolluant;

le procédé comprenant les étapes suivantes:

a) calculer, au cours du fonctionnement du véhicule à moteur et pour une période de roulage prédéterminée, une pression ou une température de consigne dans l'enceinte de stockage (8) selon un ou plusieurs paramètres du véhicule à moteur qui est/sont fonction du type de roulage dudit véhicule pendant cette période;
b) comparer la pression ou la température de consigne à la pression ou à la température mesurée par le dispositif de mesure de pression (6a) ou de température au cours du fonctionnement du véhicule à moteur après ladite période de roulage; et
c) chauffer l'enceinte de stockage (8) si la pression ou la température à l'intérieur de celle-ci est inférieure à la pression ou à la température de consigne.

2. Procédé selon la revendication 1, dans lequel l'étape a) pour déterminer la pression ou la température de consigne dans l'enceinte de stockage (8) pendant la période de roulage prédéterminée comporte les opérations suivantes:

   d). définir un critère de roulage du véhicule en fonction des différents paramètres du véhicule à moteur pendant une première période (T1) de fonctionnement dudit véhicule significativement plus courte que ladite période de roulage prédéterminée;
   e). déterminer la moyenne du critère de roulage durant la première période (T1) de fonctionnement du véhicule à moteur;
   f). comparer cette moyenne du critère de roulage à différents seuils afin de déterminer un type de roulage du véhicule à moteur durant la première période (T1) parmi plusieurs types de roulage, et
   g). attribuer une pression ou une température de consigne en fonction du type de roulage déterminé et/ou d'une tendance représentative des conditions de roulage passées, ladite tendance des conditions de roulage passées étant déterminée par une opération supplémentaire qui consiste à déterminer le temps passé par le véhicule à moteur sur chaque type de roulage durant une seconde période (T2) de fonctionnement du véhicule à moteur correspondant à ladite période de roulage prédéterminée.

3. Procédé selon la revendication 1 ou 2, dans lequel un critère de roulage est déterminé en fonction d'au moins deux paramètres choisis parmi le couple moteur, le rapport poids/puissance du véhicule à moteur, et le type de la boîte à vitesse, à savoir s'il s'agit d'une boîte à vitesse manuelle ou automatique.

4. Procédé selon la revendication 1, 2 ou 3, dans lequel la moyenne du critère de roulage, notamment durant la première période (T1) de fonctionnement du véhicule à moteur, est comparée à au moins trois seuils différents afin de pouvoir déterminer trois types de roulage.

5. Procédé selon la revendication 4, dans lequel la moyenne du critère de roulage, notamment durant la première période (T1) de fonctionnement du véhicule à moteur, est comparée à cinq seuils différents afin de pouvoir déterminer cinq types de roulage.

6. Procédé selon l'une quelconque des revendications 1 à 5, dans lequel trois tendances de roulage, notamment durant la seconde période (T2) de fonctionnement du véhicule à moteur, correspondent respectivement à une conduite en ville, sur route et sur autoroute.

7. Procédé selon la revendication 6, dans lequel une tendance dite mixte est ajoutée lorsqu'aucun type de roulage ne prédomine durant la seconde période (T2) de fonctionnement du véhicule à moteur.

8. Procédé selon l'une quelconque des revendications précédentes, dans lequel l'agent dépolluant est de l'ammoniac.

9. Procédé selon l'une quelconque des revendications précédentes, dans lequel la pression de consigne peut varier entre 1 et 15 bar afin de faire varier le débit d'ammoniac dans une plage allant de 0.5 mg/s à 50 mg/s.

10. Procédé selon l'une quelconque des revendications précédentes, dans lequel la pression ou la température de consigne est déterminée en fonction notamment de la concentration de NOx se trouvant dans les gaz d'échappement.

11. Procédé selon l'une quelconque des revendications précédentes, dans lequel la pression ou la température de consigne est déterminée en fonction notamment de la vitesse du véhicule, et/ou de la charge motrice et/ou du régime moteur pendant la période de roulage prédéterminée.

12. Procédé selon l'une quelconque des revendications précédentes, dans lequel la pression ou la température de consigne est déterminée en fonction notamment de la température du lubrifiant du moteur et/ou de la température du liquide de refroidissement du moteur pendant la période de roulage prédéterminée.

## Patentansprüche

1. Verfahren zum Steuern eines Systems, das zur Reduzierung der NOx-Menge in den Abgasen eines Motorfahrzeugs bestimmt ist, wobei das System an Bord eines Motorfahrzeugs aufweist:

   - einen Lagerbehälter (8) innerhalb von Salz vom Typ erdalkalischem Metallchlorid, wobei der Lagerbehälter

(8) ein Reinigungsmittel enthält;
- eine Heizvorrichtung (9), die ausgebildet ist, um die Temperatur des Lagerbehälters (8) zu steuern;
- ein Versorgungsmodul (6), das ausgebildet ist, um das Reinigungsmittel in die Abgase einzuleiten, und aufweist:
- eine Druck- oder Temperatur-Messvorrichtung (6a) im Innern des Lagerbehälters (8); und
- eine Dosiervorrichtung (6b) des Reinigungsmittels;

wobei das Verfahren die folgenden Schritte umfasst:

a) Berechnen, während des Betriebs des Motorfahrzeugs und für eine vorbestimmte Fahrzeit, eines Referenz-Drucks oder -Temperatur im Lagerbehälter (8) gemäß einem oder mehreren Parametern des Motorfahrzeugs, der/die vom Fahrstil des Fahrzeugs während dieser Zeit abhängt/abhängen;
b) Vergleichen des Referenz-Drucks oder -Temperatur mit dem Druck oder der Temperatur, gemessen von der Druck- oder Temperatur-Messvorrichtung (6a) während des Betriebs des Motorfahrzeugs nach der Fahrzeit; und
c) Erhitzen des Lagerbehälters (8), wenn der Druck oder die Temperatur in diesem niedriger ist als der Referenz-Druck oder -Temperatur.

**2.** Verfahren nach Anspruch 1, wobei der Schritt a) zum Bestimmen des Referenz-Drucks oder -Temperatur im Lagerbehälter (8) während der vorbestimmten Fahrzeit die folgenden Maßnahmen aufweist:

d) Definieren eines Fahrkriteriums des Fahrzeugs in Abhängigkeit der verschiedenen Kennwerte des Motorfahrzeugs während einer ersten Betriebszeit (T1) des Fahrzeugs, die signifikant kürzer ist als die vorbestimmte Fahrzeit;
e) Bestimmen des Durchschnitts des Fahrkriteriums während der ersten Betriebszeit (T1) des Motorfahrzeugs;
f) Vergleichen dieses Durchschnitts mit mehreren Grenzwerten, um während der ersten Zeit (T1) einen Fahrstil des Motorfahrzeugs aus mehreren Fahrstilen zu bestimmen; und
g) Zuweisen eines Referenz-Drucks oder -Temperatur in Abhängigkeit vom bestimmten Fahrstil und/oder eines für die vergangenen Fahrbedingungen repräsentativen Trends, wobei der Trend der vergangenen Fahrbedingungen von einer zusätzlichen Maßnahmen bestimmt wird, die darin besteht, die von dem Motorfahrzeugs mit jedem Fahrstil verbrachte Zeit während einer zweiten Betriebszeit (T2) des Motorfahrzeugs, die der vorbestimmten Fahrzeit entspricht, zu bestimmen.

**3.** Verfahren nach Anspruch 1 oder 2, wobei ein Fahrkriterium in Abhängigkeit von mindestens zwei Kennwerten bestimmt wird, die aus dem Motormoment, dem Verhältnis Gewicht/Leistung des Motorfahrzeugs und dem Typ des Getriebes, nämlich ob es sich um ein Schalt- oder ein Automatikgetriebe handelt, bestimmt wird.

**4.** Verfahren nach Anspruch 1, 2 oder 3, wobei der Durchschnitt des Fahrkriteriums, insbesondere während der ersten Betriebszeit (T1) des Motorfahrzeugs, mit mindestens drei verschiedenen Grenzwerten verglichen wird, um drei Fahrstile bestimmen zu können.

**5.** Verfahren nach Anspruch 4, wobei der Durchschnitt des Fahrkriteriums, insbesondere während der ersten Betriebszeit (T1) des Motorfahrzeugs, mit mindestens fünf verschiedenen Grenzwerten verglichen wird, um fünf Fahrstile bestimmen zu können.

**6.** Verfahren nach einem der Ansprüche 1 bis 5, wobei drei Fahrtrends, insbesondere während der zweiten Betriebszeit (T2) des Motorfahrzeugs, jeweils einem Fahren in der Stadt, auf der Landstraße und auf der Autobahn entsprechen.

**7.** Verfahren nach Anspruch 6, wobei ein sogenannter Mischtrend hinzugefügt wird, wenn kein Fahrstil während der zweiten Betriebszeit (T2) des Motorfahrzeugs vorherrschend ist.

**8.** Verfahren nach einem der vorangehenden Ansprüche, wobei das Reinigungsmittels Ammoniak ist.

**9.** Verfahren nach einem der vorangehenden Ansprüche, wobei der Referenzdruck zwischen 1 und 15 bar schwanken kann, um den Ammoniakdurchsatz in einem Bereich von 0,5 mg/s bis 50 mg/s zu variieren.

**10.** Verfahren nach einem der vorangehenden Ansprüche, wobei der Referenz-Druck oder -Temperatur insbesondere von der Konzentration des NOx bestimmt wird, das sich in den Abgasen befindet.

**11.** Verfahren nach einem der vorangehenden Ansprüche, wobei der Referenz-Druck oder -Temperatur insbesondere von der Geschwindigkeit des Fahrzeugs und/oder von der Antriebskraft und/oder von der Motordrehzahl während der vorbestimmten Fahrzeit bestimmt wird.

**12.** Verfahren nach einem der vorangehenden Ansprüche, wobei der Referenz-Druck oder -Temperatur insbesondere von der Temperatur des Schmiermittels des Motors und/oder von der Temperatur der Kühlflüssigkeit des Motors während der vorbestimmten Fahrzeit bestimmt wird.

## Claims

**1.** A method for controlling a system intended to reduce the amount of NOx in the exhaust gases of a motor vehicle, the system comprising on-board a motor vehicle:

- a storage chamber (8) in a salt of alkaline-earth metal chloride type, the storage chamber (8) containing a pollutant-removing agent;
- a heating device (9) arranged to control the temperature of the storage chamber (8);
- a feed module (6) arranged to inject the pollutant-removing agent into the exhaust gases, and comprising:
- a device (6a) for measuring pressure or temperature inside the storage chamber (8); and
- a device (6b) for proportioning the pollutant-removing agent;

the method comprising the following steps:

a) calculating, when the motor vehicle is in operation and for a predetermined driving period, a set pressure or temperature inside the storage chamber (8) according to one or more parameters of the motor vehicle which is/are a function of type of driving of said vehicle during this period;
b) comparing the set pressure or temperature with the pressure or temperature measured by the pressure or temperature measuring device (6a) during operation of the motor vehicle, after said driving period; and
c) heating the storage chamber (8) if the pressure or temperature therein is lower than the set pressure or temperature.

**2.** The method according to claim 1, wherein step a) to determine the set pressure or temperature in the storage chamber (8) during the predetermined driving period comprises the following operations:

d) defining a driving criterion of the vehicle as a function of different parameters of the motor vehicle during a first operation period (T1) of said vehicle that is significantly shorter than said predetermined driving period;
e) determining the mean driving criterion during the first operation period (T1) of the motor vehicle;
f) comparing this mean driving criterion with different thresholds to determine a type of driving of the motor vehicle during the first period (T1) from among several types of driving, and
g) allocating a set pressure or temperature as a function of the determined type of driving and/or a pattern representing past driving conditions, said pattern of past driving conditions being determined by an additional operation which consists of determining the time spent by the motor vehicle on each type of driving during a second operation period (T2) of the motor vehicle corresponding to said predetermined driving period.

**3.** The method according to claim 1 or 2, wherein a driving criterion is determined as a function of at least two parameters chosen from among engine torque, the weight/power ratio of the motor vehicle, and the type of gearbox namely whether a manual or automatic gearbox.

**4.** The method according to claim 1, 2 or 3, wherein the mean driving criterion, in particular during the first operation period (T1) of the motor vehicle is compared with at least three different thresholds so that it is possible to determine three types of driving.

**5.** The method according to claim 4, wherein the mean driving criterion, in particular during the first operation period (T1) of the motor vehicle, is compared with five different thresholds so that it is possible to determine five types of driving.

**6.** The method according to any one of claims 1 to 5, wherein three driving patterns, in particular during the second operation period (T2) of the motor vehicle, respectively correspond to urban, rural road and motorway driving.

**7.** The method according to claim 6, wherein a so-called mixed pattern is added when no type of driving predominates during the second operation period (T2) of the motor vehicle.

**8.** The method according to any one of the preceding claims, wherein the pollutant-removing agent is ammonia.

**9.** The method according to any one of the preceding claims, wherein the set pressure may vary between 1 and 15 bars to vary the flow rate of ammonia over a range of 0.5 mg/s to 50 mg/s.

**10.** The method according to any one of the preceding claims, wherein the set pressure or temperature is determined in particular as a function of the concentration of NOx in the exhaust gases.

**11.** The method according to any one of the preceding claims, wherein the set pressure or temperature is determined in particular as a function of vehicle speed and/or engine load and/or engine speed during the predetermined driving period.

**12.** The method according to any one of the preceding claims, wherein the set pressure or temperature is determined in particular as a function of the temperature of the engine lubricant and/or of the temperature of the engine coolant during the predetermined driving period.

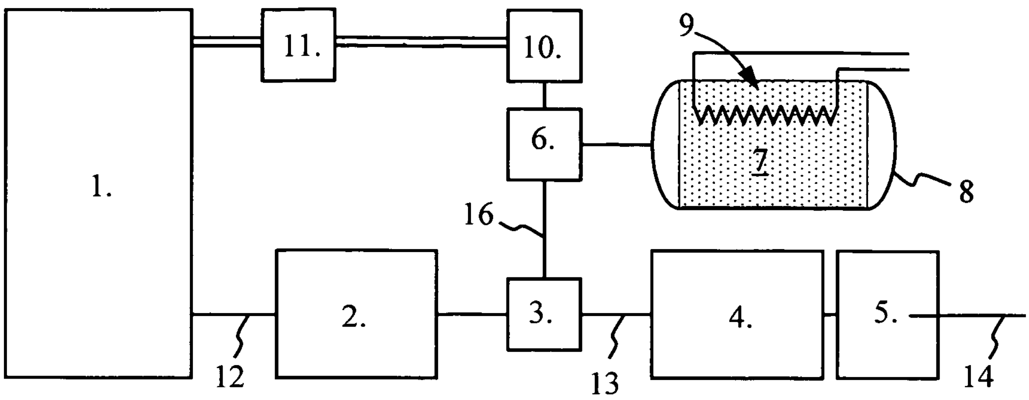


**Fig. 1**

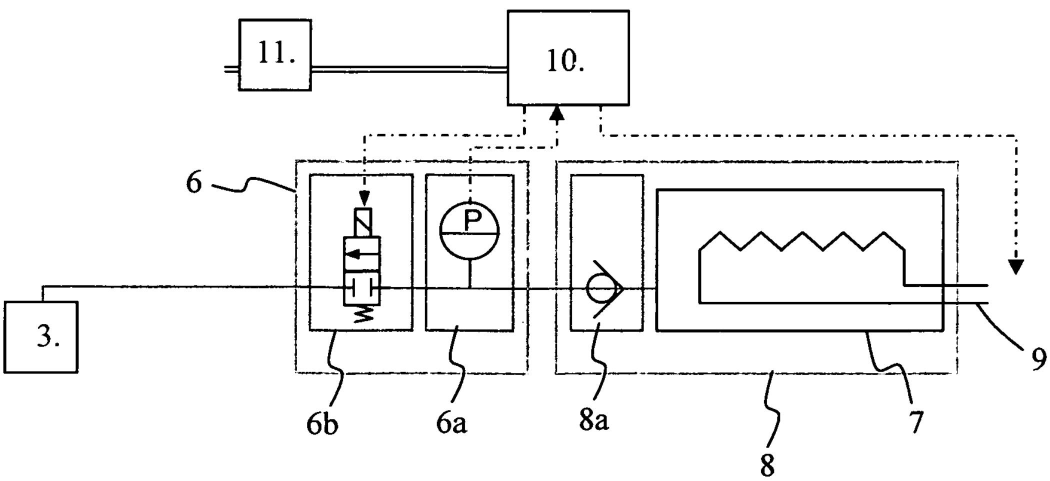


**Fig. 2**

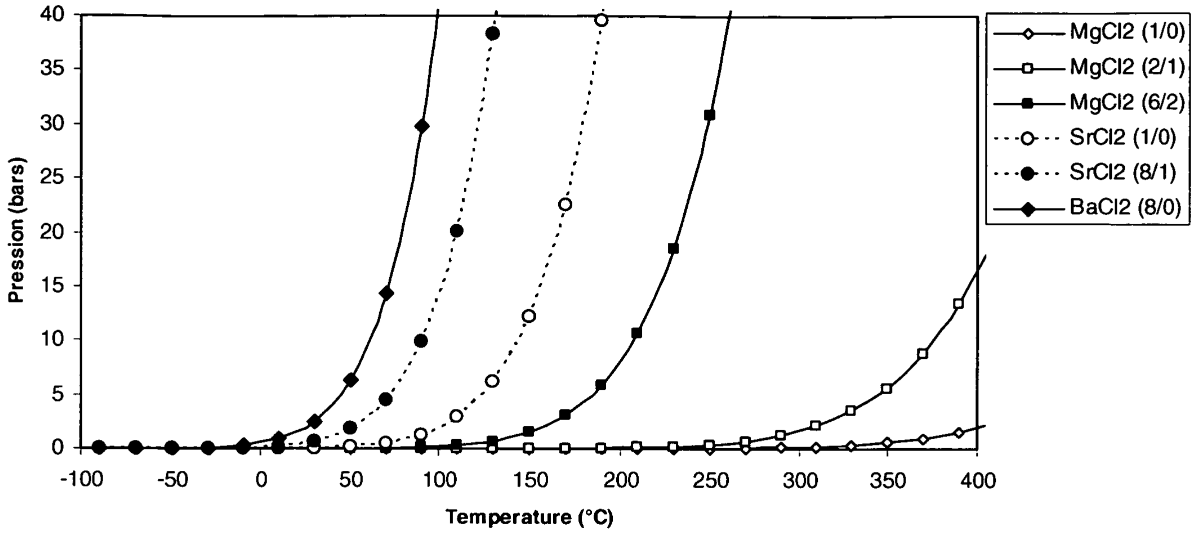
40
35
30
25
20
15
10
5
0
Pression (bars)
-100
-50
0
50
100
150
200
250
300
350
400
Temperature (°C)
MgCl2 (1/0)
MgCl2 (2/1)
MgCl2 (6/2)
SrCl2 (1/0)
SrCl2 (8/1)
BaCl2 (8/0)

**Fig. 3**

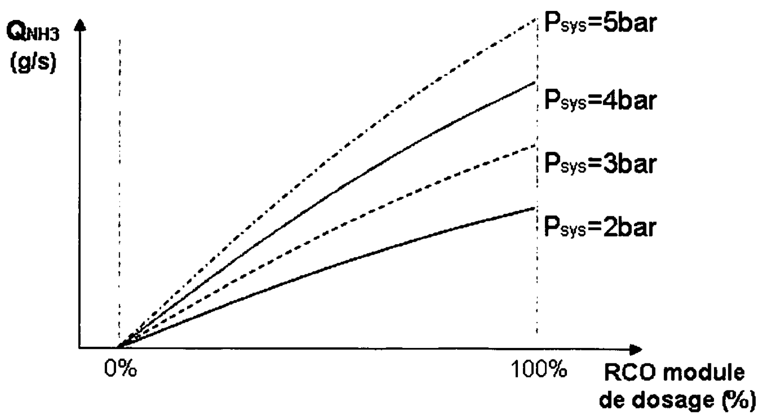
QNH3
(g/s)
Psys=5bar
Psys=4bar
Psys=3bar
Psys=2bar
0%
100%
RCO module
de dosage (%)

**Fig. 4**

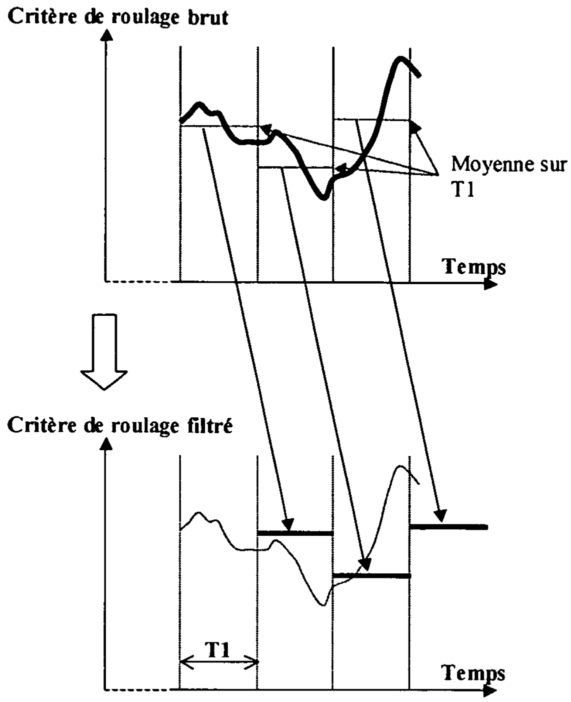
Critère de roulage brut
Moyenne sur T1
Temps
Critère de roulage filtré
T1
Temps

Fig. 5

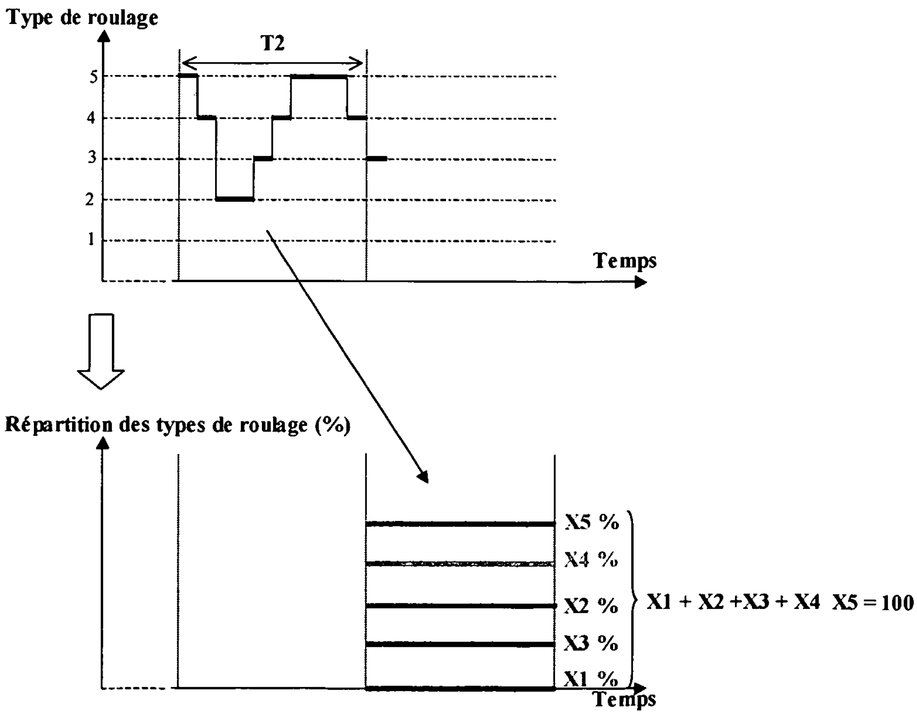
Type de roulage
T2
5
4
3
2
1
Temps
Répartition des types de roulage (%)
X5 %
X4 %
X2 %
X3 %
X1 %
X1 + X2 +X3 + X4 X5 = 100
Temps

Fig. 6

| | Ville Sévère | Ville Moyenne | Route | Montagne | Autoroute |
|---|---|---|---|---|---|
| Autoroute | $P_{14}$ | $P_{24}$ | $P_{34}$ | $P_{44}$ | $P_{54}$ |
| Route | $P_{13}$ | $P_{23}$ | $P_{33}$ | $P_{43}$ | $P_{53}$ |
| Ville | $P_{12}$ | $P_{22}$ | $P_{32}$ | $P_{42}$ | $P_{52}$ |
| Mixte | $P_{11}$ | $P_{21}$ | $P_{31}$ | $P_{41}$ | $P_{51}$ |

**Fig. 7**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- WO 2006012903 A2